# EUROPÄISCHE PATENTSCHRIFT

(11) **EP 2 719 531 B1**
(45) Veröffentlichungstag und Bekanntmachung des Hinweises auf die Patenterteilung: **21.02.2018**
(21) Anmeldenummer: 13187780.5
(22) Anmeldetag: 08.10.2013
(51) Int. Cl.: B32B 17/10, E06B 5/16

(54) **Brandschutzscheibe und Brandschutzverglasung**
Fire protection pane and flame retardant glazing
Vitre de protection contre l'incendie et vitrage de protection contre l'incendie

(30) Priorität: 09.10.2012 DE 202012009622 U
(43) Veröffentlichungstag der Anmeldung: 16.04.2014
(73) Patentinhaber: Holzbau Schmid GmbH & Co. KG, 73099 Adelberg (DE)
(72) Erfinder: Schmid, Claus, 73099 Adelberg (DE)
(74) Vertreter: Ring & Weisbrodt

(56) Entgegenhaltungen:
- EP-A1- 1 992 478
- CN-U- 202 159 204
- DE-A1-102005 061 855
- DE-A1-102008 009 775
- DE-U1-202005 018 159
- DE-U1-202008 003 804
- DE-U1-202008 008 318
- DE-U1-202008 008 695
- US-A1- 2009 114 928

## Beschreibung

Die vorliegende Erfindung betrifft eine Brandschutzscheibe, insbesondere für eine Brandschutzverglasung zur Vermeidung des Durchtritts von Feuer und/oder Rauch im Brandfall von einem Raum in einen anderen Raum, bestehend aus einem Verbund von wenigstens zwei Glasscheiben zwischen denen wenigstens eine Schicht aus einem im Brandfall aufschäumenden oder anderweitig volumenvergrößernden Brandschutzmaterial angeordnet ist.

Gegenstand der vorliegenden Erfindung ist ferner eine Brandschutzverglasung zur Vermeidung des Durchtritts von Feuer und/oder Rauch im Brandfall von einem Raum in einen anderen, mit Brandschutzscheiben bestehend aus einem Verbund von wenigstens zwei Glasscheiben zwischen denen wenigstens eine Schicht aus Brandschutzmaterial angeordnet ist.

Brandschutzverglasungen sind lichtdurchlässige Bauteile, die dazu bestimmt sind, entsprechend ihrer Feuerwiderstandsdauer nicht nur die Ausbreitung von Feuer und/oder Rauch, sondern bei Bedarf oder auf Wunsch zusätzlich auch einen unzulässigen Übergang von Wärme zu verhindern. Hierzu werden Brandschutzscheiben verwendet, die mehrlagig aus Glasscheiben mit einer dazwischen angeordneten Brandschutzschicht (Intumeszenzmaterial) aufgebaut sind. Im Brandfall wird diese Brandschutzschicht aktiviert. Die Brandschutzschicht absorbiert die Wärmestrahlung und bildet eine hochwirksame Dämmschicht.

Als Brandschutzmaterial finden feste, im Brandfall vorzugsweise aufschäumende oder anderweitig volumenvergrößernde Materialien Verwendung. Im Brandfall tritt das Brandschutzmaterial dabei aus den Stoßflächen einer Brandschutzscheibe aus und verschließt eine jeweils zur angrenzenden Brandschutzscheibe, Wand oder Decke und/oder - soweit verwendet bzw. vorgesehen - Rahmensystemen bzw. -konstruktionen belassene Fuge, so dass Flammen, Rauch und/oder Wärme nicht mehr durchtreten können. Auch finden als Brandschutzmaterial gelartige, wasserhaltige, insbesondere Alkalimetallsiliaktmasse enthaltende, Materialien Verwendung, die im Brandfall nicht aufschäumen. Eine derartige Brandschutzscheibe ist aus wenigstens zwei auf Abstand gehaltenen, parallelen Glasscheiben aufgebaut, deren geschlossener Innenraum mit einem derartigen, insbesondere gelartigen Brandschutzmittel als Brandschutzmaterial gefüllt ist.

Die DE 20 2008 008 318 U1 beschreibt ebenfalls ein Verbundsubstratelement, welches aus wenigstens einem ersten scheibenförmigen Element, wenigstens einem zweiten scheibenförmigen Element und wenigstens einer Verbundeinrichtung zum Verbinden von erstem und zweitem scheibenförmigen Element besteht. Dieses Verbundsubstratelement ist dadurch gekennzeichnet, dass zwischen dem ersten und dem zweiten scheibenförmigen Element ein Elektrolumineszenz-Element angeordnet ist. In einer Ausführungsform wird zudem als elektrischer Verbraucher eine anorganische oder organische Leuchtdiode zwischen dem Elektrolumineszenz-Element und dem ersten oder dem zweiten scheibenförmigen Element angeordnet sind.

Die US 2009/0114928 A1 offenbart eine auf LEDs basierende, leuchtende Struktur, welche aus einem ersten Dielektrikum mit einer glatten Oberfläche und einer damit verbundenen ersten Elektrode und aus einem zweiten Dielektrikum mit einer glatten Oberfläche und einer damit verbundenen zweiten Elektrode besteht. Zwischen den beiden mit Elektroden versehenen Dielektrika ist zumindest eine LED angeordnet, so dass ein erster Kontakt der LED mit der ersten Elektrode und ein zweiter Kontakt der LED mit der zweiten Elektrode verbunden sind. Die so aufgebaute leuchtende Struktur kann, besonders bei der Nutzung von Glas als Dielektrikum, beispielsweise als Werbetafel, Schaufenster oder Inneneinrichtung genutzt werden.

Die DE 20 2005 018 159 U1 beschreibt eine Verbundscheibe mit integrierter Flachleuchte, welche aus zwei elektrisch leitend beschichteten, transparenten Platten und einer dazwischen angeordneten Elektrolumineszenzschicht besteht. Bei Anliegen einer Wechselspannung jeweils an die elektrisch leitenden Schichten der beiden Platten wird eine zu den Außenseiten der Platten abstrahlende Lichtquelle erzeugt, in welcher die Darstellung von Schrift, Logos oder Bildern möglich ist.

Die EP 1 992 478 A1 beschreibt ein Verbundglaselement mit integrierter Elektrolumineszenz-Leuchtstruktur, welches aus einem ersten, zumindest teilweise transparenten Substrat mit einer beschichteten Innenseite, einem zweiten, zumindest teilweise transparenten Substrat mit einer beschichteten Innenseite und mindestens einer Elektrolumineszenz-Leuchtstruktur, welche mittels eines polymeren Haftvermittlers zwischen den beiden Innenseiten der transparenten Substrate angeordnet ist, besteht. Dabei stellen die beiden Substrate eine erste und eine zweite Elektrode dar, durch welche ein Leuchtkondensator realisiert wird, der bei Anliegen einer Versorgungsspannung an beide Elektroden eine Emission von Elektrolumineszenz hervorruft. Das so aufgebaute Verbundglaselement kann beispielsweise als Dekorelement oder als Leuchtelement genutzt werden.

Die DE 10 2005 061 855 A1 offenbart ein Glaselement mit lang nachleuchtendem Effekt, welches aus mindestens zwei Glaselementen mit einem Trageelement besteht und Langnachleuchtelemente auf oder in den Glaselementen angeordnet sind. Alternativ oder zusätzlich zu den Langnachleuchtelementen können auch LED-Elemente verwendet werden, welche im Trageelement angeordnet sind, und bezüglich Emissionsfarbe und Impulsfolge steuerbar sind.

Die DE 20 2008 008 695 U1 beschreibt ein modulares Beleuchtungssystem, welches aus einer Aufhängung und zumindest zwei voneinander beabstandeten Beleuchtungselementen besteht, wobei die Aufhängung gleichzeitig Stromleiter für die Beleuchtungselemente ist. Ein Beleuchtungselement besteht dabei aus wenigstens zwei voneinander beabstandeten scheibenförmigen Elementen, zwischen denen wenigstens ein Leuchtmittel wie eine anorganische oder organische Leuchtdiode angeordnet ist. Da die verwendeten scheibenförmigen Elemente zueinander beabstandet sind und des Weiteren keine Verwendung eines Brandschutzmaterials beschrieben wird, ist dieses Beleuchtungssystem jedoch nicht für den Brandschutz geeignet.

Die CN 202159204 U offenbart ein als Verbund ausgebildetes elektrochromes Glas, welches aus zwei transparenten Glasplatten besteht, zwischen denen, abgegrenzt durch transparente Schichten, eine Flüssigkristallschicht angeordnet ist. Mittels an der Flüssigkristallschicht befestigten Anschlussdrähten ist es bei Anlegen einer Spannung möglich, das im spannungslosen Zustand matte Glas in einen opaken Zustand zu versetzen. Dabei werden zum Schutz der Flüssigkristallschicht hitzebeständige Schichten zwischen der Flüssigkristallschicht und den äußeren Glasplatten verwendet. In einem möglichen Brandfall ist somit zumindest die Flüssigkristallschicht derart geschützt, dass eine Reaktion mit dieser, die zur Splitterung des Glasverbundes führen könnte, weitestgehend vermieden wird. Insbesondere für Anwendungen im Architekturbereich ist ein fortwährender Bedarf nach Brandschutzverglasungen mit Brandschutzscheiben zur Ausbildung von Türen, Fenstern oder Trennwänden gegeben, die vergrößerte und umfangreichere Gestaltungsmöglichkeiten erlauben. Oftmals stehen hierbei optische Aspekte im Vordergrund, wobei beispielsweise Tragkonstruktionen und/oder Rahmensysteme von Brandschutzscheiben, aber auch vorgeschriebene Fluchtweg- bzw. Notausgangkennzeichnungen oder dergleichen und deren Einrichtungen, beispielsweise Notfallbeleuchtungen, Halterungen oder dergleichen, als nachteilig und störend empfunden werden.

Zur Beseitigung der vorbeschriebenen Nachteile wird mit der vorliegenden Erfindung eine Brandschutzscheibe, insbesondere für eine Brandschutzverglasung zur Vermeidung des Durchtritts von Feuer und/oder Rauch im Brandfall von einen Raum in einen anderen Raum, bestehend aus einem Verbund von wenigstens zwei Glasscheiben, zwischen denen wenigstens eine Schicht aus einem im Brandfall aufschäumenden oder anderweitig volumenvergrößernden Brandschutzmaterial angeordnet ist, gemäss Anspruch 1 bereitgestellt, bei der wenigstens eine der Glasscheiben aus einem Verbund von wenigstens zwei Glasscheiben ausgebildet ist, wobei zwischen den Glasscheiben dieses Verbundes wenigstens ein flächiges, hinsichtlich des Lichtdurchtritts durch selbiges beeinflussbares und wenigstens ein Flüssigkristallpolymer bzw. wenigstens ein flüssigkristallines Polymer (sogenanntes Liquid Crystal Polymer (LCP)) aufweisendes Dünnschichtbauelement, und/oder wenigstens ein flächiges, zur Lichtaussendung anregbares oder aktivierbares und als organische Leuchtdiode, sogenannte OLED (OLED: Organic Light Emitting Diode), ausgebildetes Dünnschichtbauelement angeordnet ist und dass wenigstens eine der Glasscheiben aus einem Verbund von wenigstens zwei Glasscheiben ausgebildet ist, wobei zwischen den Glasscheiben dieses Verbundes wenigstens ein flächiges, hinsichtlich des Lichtdurchtritts durch selbiges beeinflussbares und wenigstens ein Flüssigkristallpolymer bzw. wenigstens ein flüssigkristallines Polymer (sogenanntes Liquid Crystal Polymer (LCP)) aufweisendes Dünnschichtbauelement, und/oder wenigstens ein flächiges, zur Lichtaussendung anregbares oder aktivierbares und als organische Leuchtdiode, sogenannte OLED (OLED: Organic Light Emitting Diode), ausgebildetes Dünnschichtbauelement angeordnet ist.

Eine vorteilhafte Ausgestaltung dieser Brandschutzscheibe sieht vor, dass zwischen den Glasscheiben, welche zwischen sich wenigstens eine Schicht aus Brandschutzmaterial aufweisen, desweiteren wenigstens ein flächiges, hinsichtlich des Lichtdurchtritts durch selbiges beeinflussbares Dünnschichtbauelement angeordnet ist, und/oder wenigstens ein flächiges, zur Lichtaussendung anregbares oder aktivierbares Dünnschichtbauelement angeordnet ist.

Zur Beseitigung der vorbeschriebenen Nachteile wird mit der vorliegenden Erfindung ferner eine Brandschutzscheibe, insbesondere für eine Brandschutzverglasung zur Vermeidung des Durchtritts von Feuer und/oder Rauch im Brandfall von einen Raum in einen anderen Raum, bestehend aus einem Verbund von wenigstens zwei Glasscheiben, zwischen denen wenigstens eine Schicht aus Brandschutzmaterial angeordnet ist, vorgeschlagen, wobei zwischen den Glasscheiben desweiteren wenigstens ein flächiges, hinsichtlich des Lichtdurchtritts durch selbiges beeinflussbares Dünnschichtbauelement angeordnet ist, und/oder wenigstens ein flächiges, zur Lichtaussendung anregbares oder aktivierbares Dünnschichtbauelement angeordnet ist. Diese Brandschutzscheibe sieht vor, dass wenigstens eine der Glasscheiben aus einem Verbund von wenigstens zwei Glasscheiben ausgebildet ist, wobei zwischen den Glasscheiben dieses Verbundes wenigstens ein flächiges, hinsichtlich des Lichtdurchtritts durch selbiges beeinflussbares Dünnschichtbauelement angeordnet ist, und/oder wenigstens ein flächiges, zur Lichtaussendung anregbares oder aktivierbares Dünnschichtbauelement angeordnet ist.

Mit erfindungsgemäß ausgestalteten Brandschutzscheiben lassen sich die Gestaltungsmöglichkeiten zur Ausbildung von Brandschutzverglasungen insbesondere im Architekturbereich weiter vergrößern. So lassen sich erfindungsgemäße Brandschutzscheiben bzw. Brandschutzverglasungen beispielsweise als Leuchtmittel, insbesondere für Gestaltungszwecke, einsetzen, besonders bevorzugt mit unterschiedlichen Farben bzw. Wellenlängen. Ferner können erfindungsgemäße Brandschutzscheiben bzw. Brandschutzverglasungen beispielsweise als beeinflussbarer, vorzugsweise schaltbarer Lichtverschluss einsetzen, vorzugsweise mit unterschiedlichen Lichtverschlussdichten.

Vorteilhafterweise ist das zur Lichtaussendung anregbare oder aktivierbare Dünnschichtbauelement im Brandfall zur Lichtaussendung anregbar oder aktivierbar und ansonsten vorzugsweise im Wesentlichen transparent, und/oder ist das hinsichtlich des Lichtdurchtritts durch selbiges beeinflussbare Dünnschichtbauelement im Brandfall hinsichtlich des Lichtdurchtritts durch selbiges beeinflussbar. Hierdurch werden insbesondere die Gestaltungsmöglichkeiten für Brandschutzanwendungen weiter gesteigert. So kann Personen beispielsweise anhand der im Brandfall gegebenen Lichtaussendung und/oder der im Brandfall gegebenen Beeinflussung des Lichtdurchtritts einer erfindungsgemäßen Brandschutzscheibe der Brandfall signalisiert werden.

Gemäß einer besonders vorteilhaften Ausgestaltung der Erfindung bildet das zur Lichtaussendung anregbare oder aktivierbare Dünnschichtbauelement und/oder das hinsichtlich des Lichtdurchtritts durch selbiges beeinflussbare Dünnschichtbauelement wenigstens ein Piktogramm aus, vorzugsweise ein Fluchtweg-, Notausgang- oder Gefahrensymbol, besonders bevorzugt in genormter bzw. standardisierter Ausgestaltung.

Gemäß einer weiteren vorteilhaften Ausgestaltung der Erfindung bildet das zur Lichtaussendung anregbare oder aktivierbare Dünnschichtbauelement und/oder das hinsichtlich des Lichtdurchtritts durch selbiges beeinflussbare Dünnschichtbauelement wenigstens ein animiertes Piktogramm aus, welches vorzugsweise aus wenigstens zwei Piktogrammen besteht, die zeitlich und/oder hinsichtlich ihrer Position seitens der Brandschutzscheibe zueinander versetzt zur Lichtaussendung anregbar oder aktivierbar sind, besonders bevorzugt mit unterschiedlichen Farben bzw. Wellenlängen, bzw. hinsichtlich des Lichtdurchtritts durch selbiges beeinflussbar sind. So lassen sich im Brandfall seitens einer erfindungsgemäßen Brandschutzscheibe Fluchtweg-, Notausgang- oder Gefahrensymbole quasi in bewegter Form signalisieren. Eine weitere vorteilhafte Ausgestaltung sieht eine schichtweise Anordnung von wenigstens zwei Dünnschichtbauelementen vor, die zur Ausbildung eines entsprechend animierten Piktogramms jeweils unterschiedliche Piktogramme aufweisen, die die zeitlich und/oder hinsichtlich ihrer Position seitens der Brandschutzscheibe zueinander versetzt zur Lichtaussendung anregbar oder aktivierbar sind bzw. hinsichtlich des Lichtdurchtritts durch selbiges beeinflussbar sind.

Eine weitere vorteilhafte Ausgestaltung der Erfindung sieht vor, dass das zur Lichtaussendung anregbare oder aktivierbare Dünnschichtbauelement und/oder das hinsichtlich des Lichtdurchtritts durch selbiges beeinflussbare Dünnschichtbauelement zumindest teilweise in der Schicht aus Brandschutzmaterial angeordnet ist. So kann das Dünnschichtbauelement insbesondere im Brandfall durch das Brandschutzmaterial vor Wärme- bzw. Hitzeeinwirkung geschützt werden, so dass dessen Funktionsfähigkeit auch im Brandfall gewährleistet bleibt, zumindest für eine den Schutzanforderungen genügende Zeit.

Vorteilhafterweise weist das hinsichtlich des Lichtdurchtritts durch selbiges beeinflussbare Dünnschichtbauelement wenigstens ein Flüssigkristallpolymer bzw. wenigstens ein flüssigkristallines Polymer - sogenanntes Liquid Crystal Polymer (LCP) - auf, und bildet vorzugsweise ein elektrochromes Dünnschichtbauelement aus. Bei derartigen Dünnschichtbauelementen ist mittels einer elektrischen Beeinflussung der Transmissionsgrad des Dünnschichtbauelements veränderbar, insbesondere da eine Ausrichtung von Kristallmolekülen entsprechend dem elektrischen Feld ermöglicht wird. Die Verwendung von derartigen flüssigkristallinen Polymeren für das hinsichtlich des Lichtdurchtritts durch selbiges beeinflussbare Dünnschichtbauelement erlaubt vorteilhafterweise eine großflächige und kostengünstige Herstellung, insbesondere da das Dünnschichtbauelement vorteilhafterweise quasi als Folienschicht ausbildbar und verarbeitbar ist.

Vorteilhafterweise ist das zur Lichtaussendung anregbare oder aktivierbare Dünnschichtbauelement als organische Leuchtdiode, sogenannte OLED (OLED: Organic Light Emitting Diode), ausgebildet, vorzugsweise als PLED (PLED: Polymer Light Emitting Diode), SMOLED (SMOLED: Small Molecules Organic Light Emitting Diode) oder AMOLED (AMOLED: Active Matrix Organic Light Emitting Diode). Die Verwendung von derartigen organischen Leuchtdioden als Dünnschichtbauelement erlaubt vorteilhafterweise eine großflächige und kostengünstige Herstellung, insbesondere da das Dünnschichtbauelement vorteilhafterweise quasi als Folienschicht ausbildbar und verarbeitbar ist.

Gemäß einer weiteren vorteilhaften Ausgestaltung der Erfindung sind elektrische Anschlüsse zum Kontaktieren des hinsichtlich des Lichtdurchtritts durch selbiges beeinflussbaren Dünnschichtbauelements und/oder elektrische Anschlüsse zum Kontaktieren des zur Lichtaussendung anregbaren oder aktivierbaren Dünnschichtbauelements zumindest an einem seitlichen Randbereich der Brandschutzscheibe zugänglich. Derartige elektrische Anschlüsse können vorteilhafterweise durch folienartige Schichten zwischen den jeweiligen Glasscheiben und/oder wenigstens einem anderen Dünnschichtbauelement ausgebildet werden. Vorteilhafterweise weisen derartige Schichten strukturierte, elektrisch leitfähige Beschichtungen auf, beispielsweise Silber- oder Golddrähte mit Strukturen im Nanometerbereich, so dass diese insbesondere im nicht aktivierten Zustand des jeweiligen Dünnschichtbauelements im Wesentlichen als transparent wahrgenommen werden.

Eine weitere vorteilhafte Ausgestaltung der Erfindung sieht vor, dass die Brandschutzscheibe wenigstens ein vorzugsweise zwischen den Glasscheiben integriertes Sensorikelement zur Aktivierung des wenigstens einen Dünnschichtbauelements aufweist.

Eine bevorzugte Ausgestaltung der erfindungsgemäßen Brandschutzscheibe sieht vor, dass diese aus wenigstens zwei auf Abstand gehaltenen, parallelen Glasscheiben aufgebaut ist, deren geschlossener Innenraum mit einem insbesondere gelartigen Brandschutzmittel als Brandschutzmaterial gefüllt ist.

Vorteilhafterweise ist die erfindungsgemäße Brandschutzscheibe zur Ausbildung einer Tür, eines Fensters, oder einer Trennwand ausgebildet.

Gegenstand der vorliegenden Erfindung ist ferner eine Brandschutzverglasung zur Vermeidung des Durchtritts von Feuer und/oder Rauch im Brandfall von einem Raum in einen anderen Raum, mit Brandschutzscheiben bestehend aus einem Verbund von wenigstens zwei Glasscheiben, zwischen denen wenigstens eine Schicht aus einem Brandschutzmaterial angeordnet ist, wobei wenigstens eine der Brandschutzscheiben der Brandschutzverglasung eine erfindungsgemäße Brandschutzscheibe ist.

Gemäß einer weiteren vorteilhaften Ausgestaltung der Erfindung ist die Brandschutzverglasung gekennzeichnet durch wenigstens zwei nebeneinander oder übereinander angeordnete erfindungsgemäße Brandschutzscheiben, deren Dünnschichtbauelemente vorzugsweise im Brandfall zeitlich zueinander versetzt zur Lichtaussendung anregbar oder aktivierbar sind, und/oder deren Dünnschichtbauelemente vorzugsweise im Brandfall hinsichtlich des Lichtdurchtritts durch selbige beeinflussbar sind. So kann eine Brandschutzverglasung geschaffen werden, die im Brandfall animierte Fluchtweg-, Notausgang- oder Gefahrensymbole über mehrere nebeneinander oder übereinander angeordnete Brandschutzscheiben bewegt signalisiert.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in schematischer Schnittansicht ein erstes Ausführungsbeispiel einer Brandschutzscheibe;
- Fig. 2: in schematischer Schnittansicht ein zweites Ausführungsbeispiel einer Brandschutzscheibe;
- Fig. 3: in schematischer Schnittansicht ein drittes Ausführungsbeispiel einer Brandschutzscheibe;
- Fig. 4: in schematischer Schnittansicht ein viertes Ausführungsbeispiel einer Brandschutzscheibe, beispielsweise gemäß einer Schnittlinie A-A bzw. B-B gemäß Fig. 13;
- Fig. 5: in schematischer Schnittansicht ein fünftes Ausführungsbeispiel einer Brandschutzscheibe;
- Fig. 6: in schematischer Schnittansicht ein sechstes Ausführungsbeispiel einer Brandschutzscheibe;
- Fig. 7: in schematischer Schnittansicht ein siebtes Ausführungsbeispiel einer Brandschutzscheibe, beispielsweise gemäß einer Schnittlinie A-A bzw. B-B gemäß Fig. 13;
- Fig. 8: in schematischer Schnittansicht ein achtes Ausführungsbeispiel einer Brandschutzscheibe;
- Fig. 9: in schematischer Schnittansicht ein neuntes Ausführungsbeispiel einer Brandschutzscheibe;
- Fig. 10: in schematischer Schnittansicht ein zehntes Ausführungsbeispiel einer erfindungsgemäßen Brandschutzscheibe;
- Fig. 11: in schematischer Schnittansicht ein elftes Ausführungsbeispiel einer erfindungsgemäßen Brandschutzscheibe;
- Fig. 12: in schematischer Schnittansicht ein zwölftes Ausführungsbeispiel einer erfindungsgemäßen Brandschutzscheibe;
- Fig. 13: eine schematische Ansicht eines Ausführungsbeispiels einer erfindungsgemäßen Brandschutzverglasung in einem ersten Betriebszustand;
- Fig. 14: die erfindungsgemäße Brandschutzverglasung nach Fig. 13 in einem zweiten Betriebszustand;
- Fig. 15: die erfindungsgemäße Brandschutzverglasung nach Fig. 13 in einem zweiten Betriebszustand; und
- Fig. 16: eine schematische Ansicht eines zweiten Ausführungsbeispiels einer erfindungsgemäßen Brandschutzverglasung.

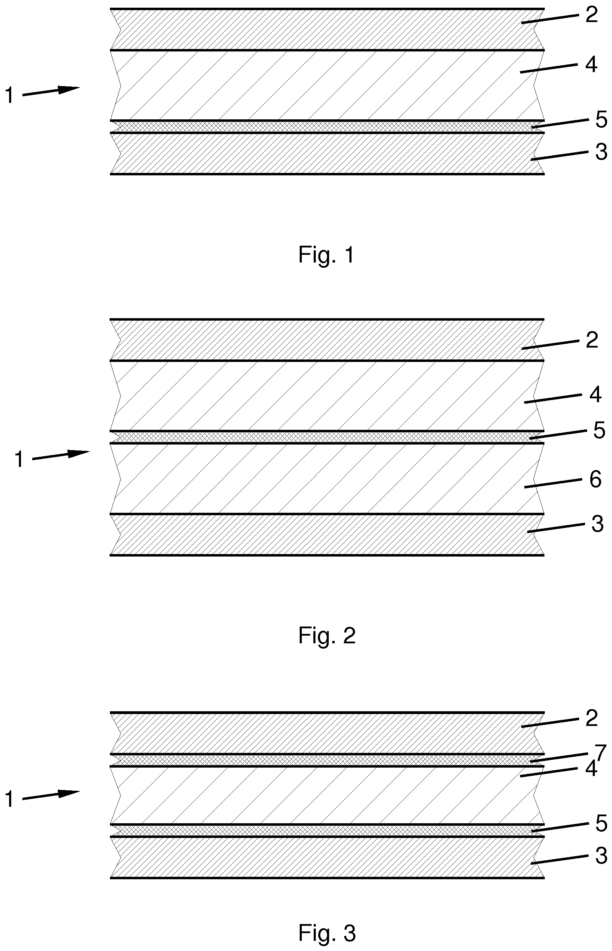

Fig. 1 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 sind eine Schicht 4 aus Brandschutzmaterial und ein flächiges, zur Lichtaussendung anregbares oder aktivierbares Dünnschichtbauelement 5 angeordnet. Das Dünnschichtbauelement 5 ist vorzugsweise im Brandfall zur Lichtaussendung anregbar oder aktivierbar und ansonsten im Wesentlichen transparent. Bei dem Dünnschichtbauelement 5 handelt es sich um eine schichtartig ausgebildete organische Leuchtdiode, insbesondere eine sogenannte OLED, PLED, SMOLED oder AMOLED. Die Glasscheiben 2 und/oder 3 selbst können aus mehreren miteinander verbundenen Glasscheiben bestehen. In Fig. 1 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren des Dünnschichtbauelements 5.

Fig. 2 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 sind eine Schicht 4 aus Brandschutzmaterial und eine Schicht 6 aus Brandschutzmaterial angeordnet. Zwischen den Schichten 4 und 6 aus Brandschutzmaterial ist ein flächiges, zur Lichtaussendung anregbares oder aktivierbares Dünnschichtbauelement 5 angeordnet. Das Dünnschichtbauelement 5 ist insbesondere zur Gestaltung und/oder Informationsgebung zur Lichtaussendung anregbar oder aktivierbar und ansonsten im Wesentlichen transparent. Bei dem zwischen den Brandschutzschichten 4 und 6 angeordneten Dünnschichtbauelement 5 handelt es sich um eine schichtartig ausgebildete organische Leuchtdiode, insbesondere eine sogenannte OLED, PLED, SMOLED oder AMOLED. Die Glasscheiben 2 und/oder 3 selbst können aus mehreren miteinander verbundenen Glasscheiben bestehen. In Fig. 2 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren des Dünnschichtbauelements 5.

Fig. 3 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 sind ein Dünnschichtbauelement 5, eine Schicht 4 aus Brandschutzmaterial und ein weiteres Dünnschichtbauelement 7 angeordnet. Die Schicht 4 aus Brandschutzmaterial ist zwischen den Dünnschichtbauelementen 5 und 7 angeordnet. Die Dünnschichtbauelemente 5 und 7 sind vorzugsweise im Brandfall zur Lichtaussendung anregbar oder aktivierbar und ansonsten im Wesentlichen transparent. Bei den Dünnschichtbauelementen 5 und 7 handelt es sich jeweils um ein flächiges, zur Lichtaussendung anregbares oder aktivierbares Dünnschichtbauelement 5 bzw. 7. Bei den Dünnschichtbauelementen 5 und 7 handelt es sich jeweils um eine schichtartig ausgebildete organische Leuchtdiode, insbesondere eine sogenannte OLED, PLED, SMOLED oder AMOLED. Die Glasscheiben 2 und/oder 3 selbst können aus mehreren miteinander verbundenen

Glasscheiben bestehen. In Fig. 3 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren der Dünnschichtbauelemente 5 und 7.

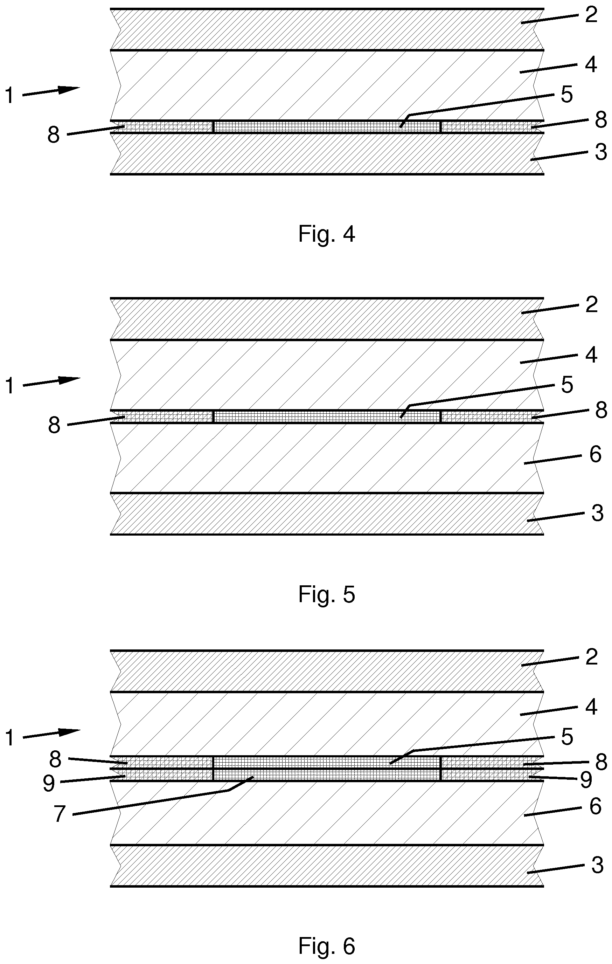

Fig. 4 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 sind eine Schicht 4 aus Brandschutzmaterial und ein flächiges, zur Lichtaussendung anregbares oder aktivierbares Dünnschichtbauelement 5 angeordnet. Das Dünnschichtbauelement 5 ist vorzugsweise im Brandfall zur Lichtaussendung anregbar oder aktivierbar und ansonsten im Wesentlichen transparent. Das Dünnschichtbauelement 5 ist in einer Schicht 8 eingebettet, welche aus Brandschutzmaterial oder einem sonstigen, vorzugsweise transparenten Material bestehen kann. Die Schicht 8 dient dabei vorzugsweise zur Aufnahme bzw. Positionierung des Dünnschichtbauelements 5. Bei dem Dünnschichtbauelement 5 handelt es sich um eine schichtartig ausgebildete organische Leuchtdiode, insbesondere eine sogenannte OLED, PLED, SMOLED oder AMOLED. Die Glasscheiben 2 und/oder 3 selbst können aus mehreren miteinander verbundenen Glasscheiben bestehen. In Fig. 4 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren des Dünnschichtbauelements 5.

Fig. 5 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 sind eine Schicht 4 aus Brandschutzmaterial und eine Schicht 6 aus Brandschutzmaterial angeordnet. Zwischen den Schichten 4 und 6 aus Brandschutzmaterial ist ein flächiges, zur Lichtaussendung anregbares oder aktivierbares Dünnschichtbauelement 5 angeordnet. Das Dünnschichtbauelement 5 ist insbesondere zur Gestaltung und/oder Informationsgebung zur Lichtaussendung anregbar oder aktivierbar und ansonsten im Wesentlichen transparent. Das Dünnschichtbauelement 5 ist in einer Schicht 8 eingebettet, welche aus Brandschutzmaterial oder einem sonstigen, vorzugsweise transparenten Material bestehen kann. Die Schicht 8 dient dabei vorzugsweise zur Aufnahme bzw. Positionierung des Dünnschichtbauelements 5. Bei dem zwischen den Brandschutzschichten 4 und 6 angeordneten Dünnschichtbauelement 5 handelt es sich um eine schichtartig ausgebildete organische Leuchtdiode, insbesondere eine sogenannte OLED, PLED, SMOLED oder AMOLED. Die Glasscheiben 2 und/oder 3 selbst können aus mehreren miteinander verbundenen Glasscheiben bestehen. In Fig. 5 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren des Dünnschichtbauelements 5.

Fig. 6 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 sind eine Schicht 4 aus Brandschutzmaterial und eine Schicht 6 aus Brandschutzmaterial angeordnet. Zwischen den Schichten 4 und 6 aus Brandschutzmaterial sind zwei flächige, zur Lichtaussendung anregbare oder aktivierbare Dünnschichtbauelemente 5 und 7 angeordnet. Die Dünnschichtbauelemente 5 und 7 sind insbesondere zur Gestaltung und/oder Informationsgebung zur Lichtaussendung anregbar oder aktivierbar und ansonsten im Wesentlichen transparent. Die Dünnschichtbauelemente 5 und 7 sind schichtweise hintereinanderliegend angeordnet. Die Dünnschichtbauelemente 5 und 7 sind jeweils in einer Schicht 8 bzw. 9 eingebettet, welche aus Brandschutzmaterial oder einem sonstigen, vorzugsweise transparenten Material bestehen kann. Die Schicht 8 bzw. 9 dient dabei vorzugsweise zur Aufnahme bzw. Positionierung des Dünnschichtbauelements 5 bzw. 7. Bei den Dünnschichtbauelementen 5 und 7 handelt es sich jeweils um eine schichtartig ausgebildete organische Leuchtdiode, insbesondere eine sogenannte OLED, PLED, SMOLED oder AMOLED. Die Glasscheiben 2 und/oder 3 selbst können aus mehreren miteinander verbundenen Glasscheiben bestehen. In Fig. 6 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren der Dünnschichtbauelemente 5 und 7.

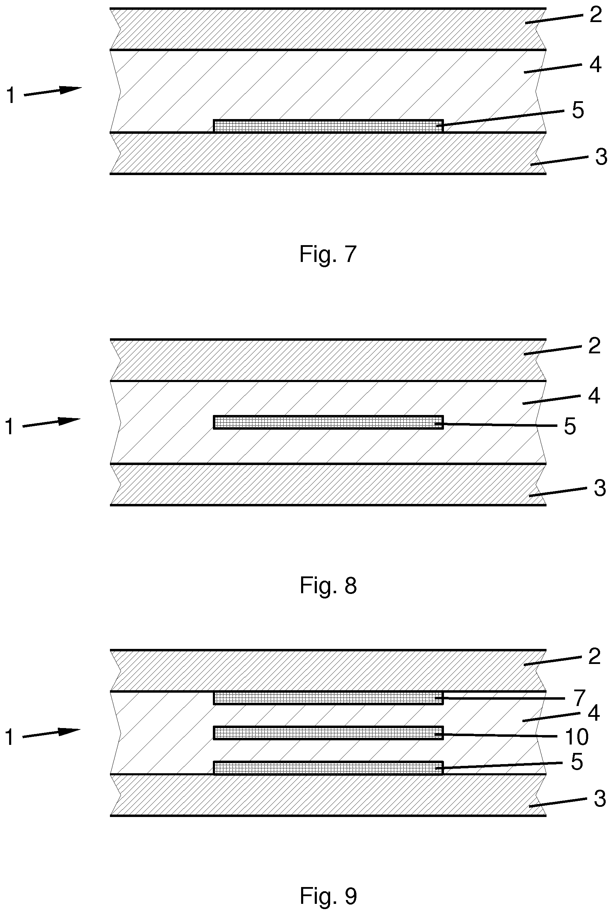

Fig. 7 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 sind eine Schicht 4 aus Brandschutzmaterial und ein flächiges, zur Lichtaussendung anregbares oder aktivierbares Dünnschichtbauelement 5 angeordnet. Das Dünnschichtbauelement 5 ist vorzugsweise im Brandfall zur Lichtaussendung anregbar oder aktivierbar und ansonsten im Wesentlichen transparent. Das Dünnschichtbauelement 5 ist in der Schicht 4 aus Brandschutzmaterial eingebettet und grenzt an die Glasscheibe 3 an. Bei dem Dünnschichtbauelement 5 handelt es sich um eine schichtartig ausgebildete organische Leuchtdiode, insbesondere eine sogenannte OLED, PLED, SMOLED oder AMOLED. Die Glasscheiben 2 und/oder 3 selbst können aus mehreren miteinander verbundenen Glasscheiben bestehen. In Fig. 7 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren des Dünnschichtbauelements 5.

Fig. 8 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 sind eine Schicht 4 aus Brandschutzmaterial und ein flächiges, zur Lichtaussendung anregbares oder aktivierbares Dünnschichtbauelement 5 angeordnet. Das Dünnschichtbauelement 5 ist insbesondere zur Gestaltung und/oder Informationsgebung zur Lichtaussendung anregbar oder aktivierbar und ansonsten im Wesentlichen transparent. Das Dünnschichtbauelement 5 ist in der Schicht 4 aus Brandschutzmaterial eingebettet. Bei dem Dünnschichtbauelement 5 handelt es sich um eine schichtartig ausgebildete organische Leuchtdiode, insbesondere eine sogenannte OLED, PLED, SMOLED oder AMOLED. Die Glasscheiben 2 und/oder 3 selbst können aus mehreren miteinander verbundenen Glasscheiben bestehen. In Fig. 8 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren des Dünnschichtbauelements 5.

Fig. 9 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 sind eine Schicht 4 aus Brandschutzmaterial und drei flächige, zur Lichtaussendung anregbare oder aktivierbare Dünnschichtbauelementen 5, 7 und 10 angeordnet. Die Dünnschichtbauelemente 5 und 7 sind vorzugsweise im Brandfall zur Lichtaussendung anregbar oder aktivierbar und ansonsten im Wesentlichen transparent. Das Dünnschichtbauelement 10 ist, bei Bedarf und/oder Wunsch in Kombination mit den Dünnschichtbauelementen 5 und 7, insbesondere zur Gestaltung und/oder Informationsgebung zur Lichtaussendung anregbar oder aktivierbar und ansonsten im Wesentlichen transparent. Die Dünnschichtbauelemente 5, 7 und 10 sind voneinander beabstandet und schichtweise hintereinanderliegend in der Schicht 4 aus Brandschutzmaterial eingebettet. Dabei grenzt das Dünnschichtbauelement 5 an die Glasscheibe 3 und das Dünnschichtbauelement 7 an die Glasscheibe 2 an. Bei den Dünnschichtbauelementen 5, 7 und 10 handelt es sich jeweils um eine schichtartig ausgebildete organische Leuchtdiode, insbesondere eine sogenannte OLED, PLED, SMOLED oder AMOLED. Die Glasscheiben 2 und/oder 3 selbst können aus mehreren miteinander verbundenen Glasscheiben bestehen. In Fig. 9 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren der Dünnschichtbauelemente 5, 7 und 10.

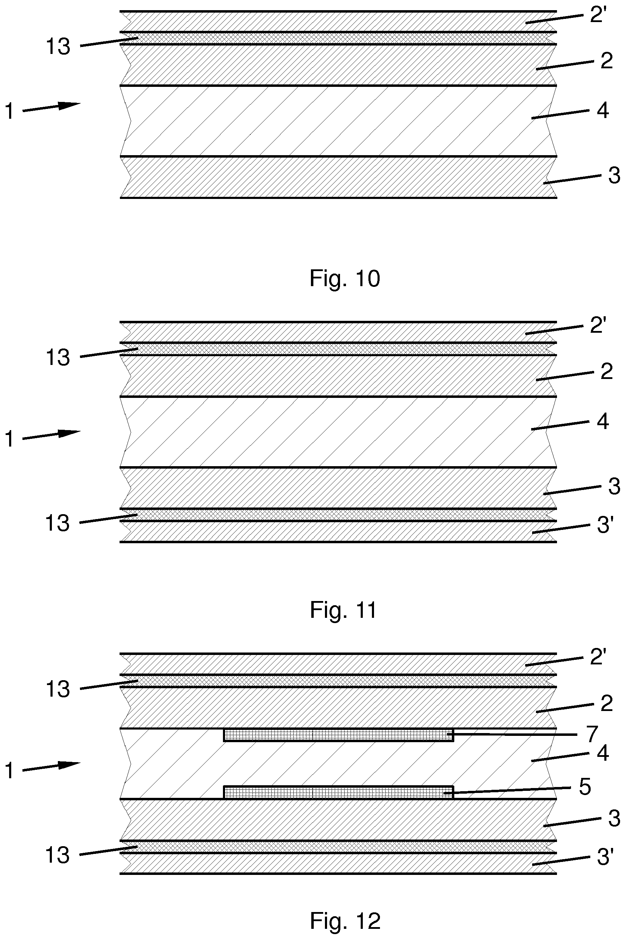

Fig. 10 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 ist eine Schicht 4 aus Brandschutzmaterial angeordnet. Die Glasscheibe 2 ist dabei aus einem Verbund von wenigstens zwei Glasscheiben, vorliegend der Glasscheibe 2 und der Glasscheibe 2' ausgebildet. Zwischen den Glasscheiben 2 und 2' dieses Verbundes ist ein flächiges, hinsichtlich des Lichtdurchtritts durch selbiges beeinflussbares Dünnschichtbauelement 13 angeordnet. Das Dünnschichtbauelement 13 ist vorzugsweise im Brandfall hinsichtlich des Lichtdurchtritts durch selbiges beeinflussbar. Bei dem hinsichtlich des Lichtdurchtritts durch selbiges beeinflussbaren Dünnschichtbauelement 13 handelt es sich um ein Dünnschichtbauelement 13, welches wenigstens ein Flüssigkristallpolymer bzw. wenigstens ein flüssigkristallines Polymer - sogenanntes Liquid Crystal Polymer (LCP) - aufweist, und vorzugsweise ein elektrochromes Dünnschichtbauelement 13 ausbildet. Die Glasscheiben 2 und/oder 3 selbst können ebenfalls aus mehreren miteinander verbundenen Glasscheiben bestehen. In Fig. 10 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren des Dünnschichtbauelements 13.

Fig. 11 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 ist eine Schicht 4 aus Brandschutzmaterial angeordnet. Die Glasscheibe 2 als auch die Glasscheibe 3 ist dabei jeweils aus einem Verbund von wenigstens zwei Glasscheiben, vorliegend der Glasscheibe 2 und der Glasscheibe 2' bzw. der Glasscheibe 3 und der Glasscheibe 3' ausgebildet. Zwischen den Glasscheiben 2 und 2' bzw. den Glasscheiben 3 und 3' des jeweiligen Verbundes ist ein flächiges, hinsichtlich des Lichtdurchtritts durch selbiges beeinflussbares Dünnschichtbauelement 13 angeordnet. Das Dünnschichtbauelement 13 ist vorzugsweise im Brandfall hinsichtlich des Lichtdurchtritts durch selbiges beeinflussbar. Bei dem hinsichtlich des Lichtdurchtritts durch selbiges beeinflussbaren Dünnschichtbauelement 13 handelt es sich um ein Dünnschichtbauelement 13, welches wenigstens ein Flüssigkristallpolymer bzw. wenigstens ein flüssigkristallines Polymer - sogenanntes Liquid Crystal Polymer (LCP) - aufweist, und vorzugsweise ein elektrochromes Dünnschichtbauelement 13 ausbildet. Die Glasscheiben 2 und/oder 3 selbst können ebenfalls aus mehreren miteinander verbundenen Glasscheiben bestehen. In Fig. 11 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren der Dünnschichtbauelemente 13.

Fig. 12 zeigt in einer schematischen Schnittansicht eine Brandschutzscheibe 1. Die Brandschutzscheibe 1 besteht aus einem Verbund einer Glasscheibe 2 und einer Glasscheibe 3. Zwischen den Glasscheiben 2 und 3 sind eine Schicht 4 aus Brandschutzmaterial und zwei flächige, zur Lichtaussendung anregbare oder aktivierbare Dünnschichtbauelemente 5 und 7 angeordnet. Die Dünnschichtbauelemente 5 und 7 sind vorzugsweise im Brandfall zur Lichtaussendung anregbar oder aktivierbar und ansonsten im Wesentlichen transparent. Die Dünnschichtbauelemente 5 und 7 sind voneinander beabstandet und schichtweise hintereinanderliegend in der Schicht 4 aus Brandschutzmaterial eingebettet. Dabei grenzt das Dünnschichtbauelement 5 an die Glasscheibe 3 und das Dünnschichtbauelement 7 an die Glasscheibe 2 an. Bei den Dünnschichtbauelementen 5 und 7 handelt es sich jeweils um eine schichtartig ausgebildete organische Leuchtdiode, insbesondere eine sogenannte OLED, PLED, SMOLED oder AMOLED. Die Glasscheibe 2 als auch die Glasscheibe 3 ist dabei jeweils aus einem Verbund von wenigstens zwei Glasscheiben, vorliegend der Glasscheibe 2 und der Glasscheibe 2' bzw. der Glasscheibe 3 und der Glasscheibe 3' ausgebildet. Zwischen den Glasscheiben 2 und 2' bzw. den Glasscheiben 3 und 3' des jeweiligen Verbundes ist ein flächiges, hinsichtlich des Lichtdurchtritts durch selbiges beeinflussbares Dünnschichtbauelement 13 angeordnet. Das Dünnschichtbauelement 13 ist vorzugsweise im Brandfall hinsichtlich des Lichtdurchtritts durch selbiges beeinflussbar. Bei dem hinsichtlich des Lichtdurchtritts durch selbiges beeinflussbaren Dünnschichtbauelement 13 handelt es sich um ein Dünnschichtbauelement 13, welches wenigstens ein Flüssigkristallpolymer bzw. wenigstens ein flüssigkristallines Polymer - sogenanntes Liquid Crystal Polymer (LCP) - aufweist, und vorzugsweise ein elektrochromes Dünnschichtbauelement 13 ausbildet. Die Glasscheiben 2 und/oder 3 selbst können ebenfalls aus mehreren miteinander verbundenen Glasscheiben bestehen. In Fig. 12 sind seitliche Ränder der Brandschutzscheibe 1 und je nach Ausgestaltung mitunter vorgesehene bzw. erforderliche Rahmen- und/oder Randkonstruktionen der Brandschutzscheibe 1 nicht explizit dargestellt. Gleiches gilt für elektrische Anschlüsse zum Kontaktieren der Dünnschichtbauelemente 5, 7 und 13.

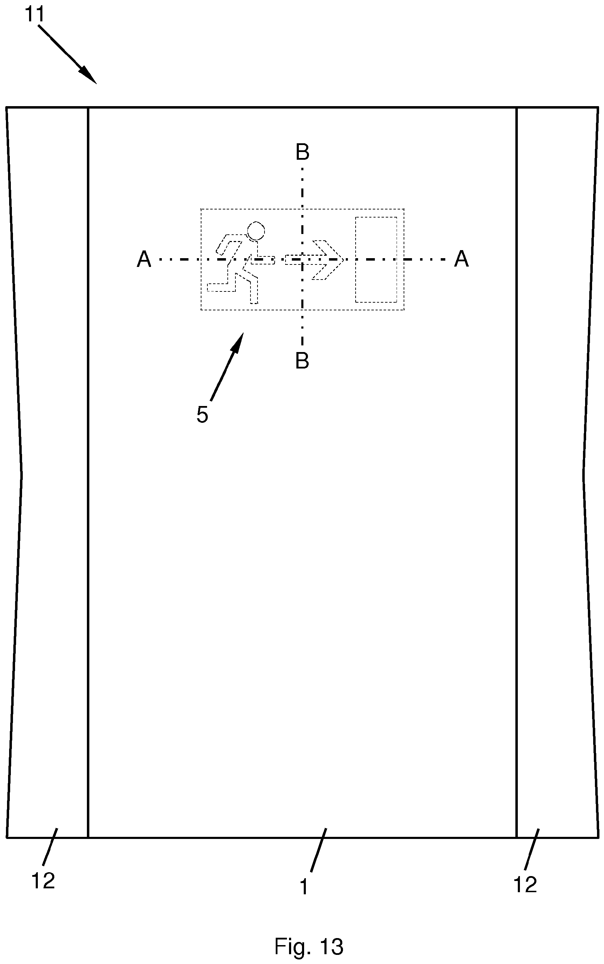

Fig. 13, Fig. 14 und Fig. 15 zeigen eine schematische Ansicht einer Brandschutzverglasung 11, bestehend aus drei nebeneinander angeordneten Brandschutzscheiben 1 bzw. 12. Von den Brandschutzscheiben 1 bzw. 12 ist wenigstens die in der Mitte dargestellte Brandschutzscheibe 1 eine Brandschutzscheibe 1 entsprechend einer Ausführung nach Fig. 1 bis Fig. 12 oder einer Kombination derartiger Brandschutzscheiben 1. In Fig. 13, Fig. 14 und Fig. 15 sind seitliche Ränder der Brandschutzverglasung 11 und der Brandschutzscheiben 1 bzw. 12 und je nach Ausgestaltung mitunter vorgesehene bzw. erforderliche Rahmen- und/oder Randkonstruktionen der Brandschutzverglasung 11 und der Brandschutzscheiben 1 bzw. 12 nicht explizit dargestellt. Gleiches gilt für elektrische Anschlüsse zum Kontaktieren der Dünnschichtbauelemente 5.

Die Brandschutzscheibe 1 weist wenigstens ein flächiges, zur Lichtaussendung anregbares oder aktivierbares und/oder hinsichtlich des Lichtdurchtritts durch selbiges beeinflussbares Dünnschichtbauelement 5 auf. Das Dünnschichtbauelement 5 ist vorzugsweise im Brandfall zur Lichtaussendung anregbar oder aktivierbar und/oder hinsichtlich des Lichtdurchtritts durch selbiges beeinflussbar und ansonsten im Wesentlichen transparent. Die Transparenz, entsprechend einem ersten Betriebszustand, in welchem das Dünnschichtbauelement 5 nicht aktiviert ist, ist in Fig. 13 durch die gestrichelte Darstellung des Dünnschichtbauelements 5 gekennzeichnet. Das Dünnschichtbauelement 5 bildet vorliegend ein Piktogramm aus, welches als Fluchtwegsymbol ausgestaltet ist und die für das Fluchtwegsymbol vorgeschriebenen Norm- bzw. Standard-gemäßen Anforderungen erfüllt, insbesondere hinsichtlich der Farbgebung. Das von dem Dünnschichtbauelement 5 ausgebildete Piktogramm ist vorliegend ein animiertes Piktogramm, bestehend aus wenigstens zwei Piktogrammen, die zeitlich und/oder hinsichtlich ihrer Position seitens der Brandschutzscheibe 1 zueinander versetzt wiedergebbar sind.

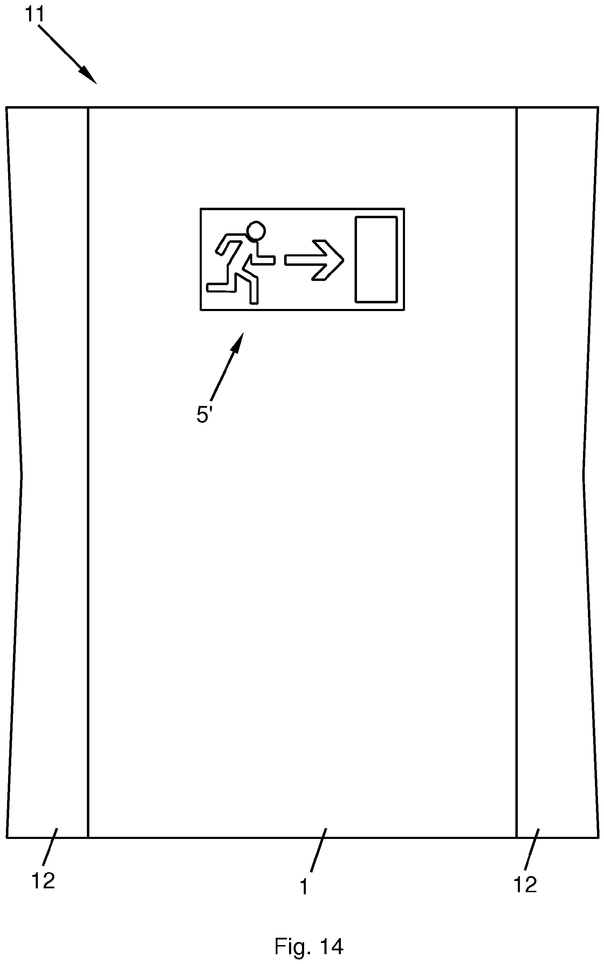

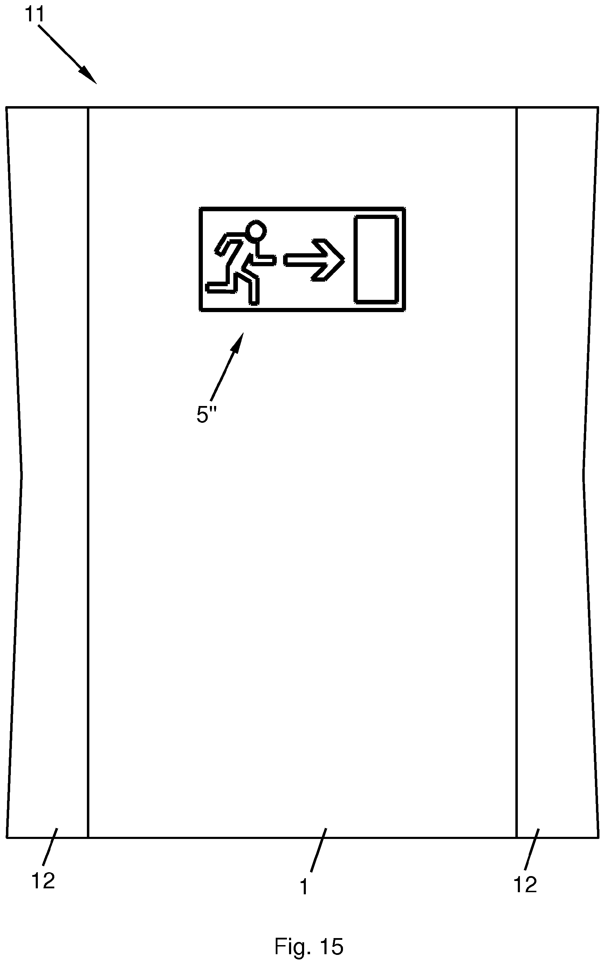

Die Animierung des Piktogramms ist durch die in Fig. 14 und Fig. 15 dargestellte unterschiedliche Ausgestaltung des Piktogramms beispielhaft dargestellt. Im Brandfall wird das Dünnschichtbauelement 5 aktiviert. Der in Fig. 14 dargestellte zweite Betriebszustand des Dünnschichtbauelements 5 zeigt eine erste Darstellung des animierten Piktogramms des Dünnschichtbauelements 5, gekennzeichnet durch die im Vergleich zu Fig. 13 nicht mehr gestrichelte Darstellung des Dünnschichtbauelements 5 und die Verwendung des Bezugszeichens 5'. Der in Fig. 15 dargestellte dritte Betriebszustand des Dünnschichtbauelements 5 zeigt eine zweite Darstellung des animierten Piktogramms des Dünnschichtbauelements 5, gekennzeichnet durch die im Vergleich zu Fig. 14 mit breiteren Linien gegebene Darstellung des Dünnschichtbauelements 5 und die Verwendung des Bezugszeichens 5". Die in Fig. 14 und Fig. 15 gegebene Darstellung dient dabei nur einer Verdeutlichung der Animierung des Piktogramms, welche sich vorteilhafterweise zeitlich versetzt zueinander abwechselnd durch Wiedergabe des Betriebszustandes von Fig. 14 und Fig. 15 in einem Blinken, einer inversen Darstellung oder einer eine Bewegung imitierenden anderen Bewegungsposition des dargestellten Symbols repräsentieren, beispielsweise nach Art eines sogenannten Daumenkinos.

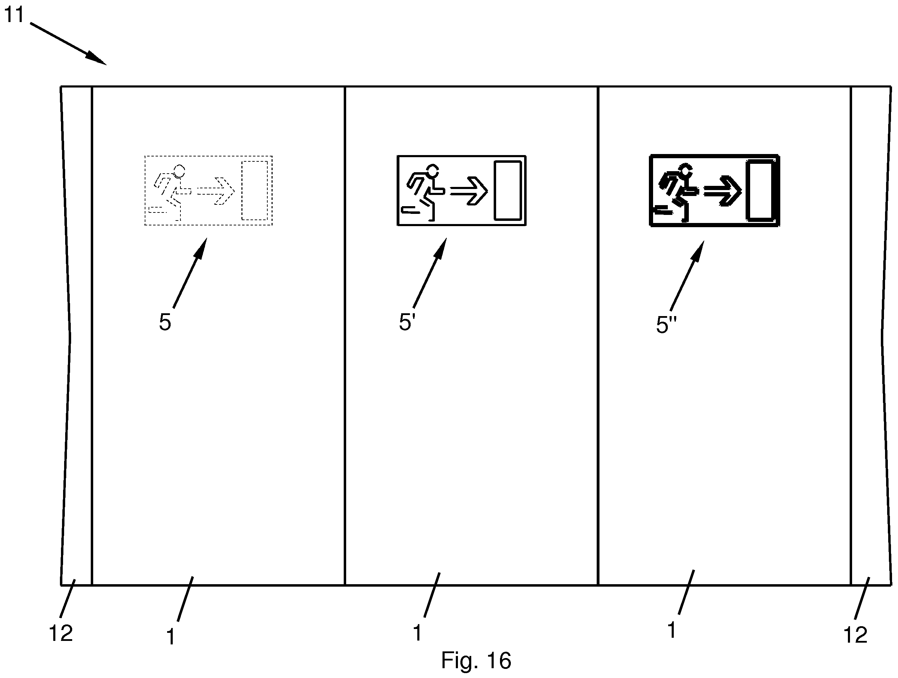

Fig. 16 zeigt eine schematische Ansicht einer Brandschutzverglasung 11, bestehend aus fünf nebeneinander angeordneten Brandschutzscheiben 1 bzw. 12. Von den Brandschutzscheiben 1 bzw. 12 sind die drei in der Mitte dargestellten Brandschutzscheiben 1 jeweils eine Brandschutzscheibe 1 entsprechend einer Ausführung nach Fig. 1 bis Fig. 15. In Fig. 16 sind seitliche Ränder der Brandschutzverglasung 11 und der Brandschutzscheiben 1 bzw. 12 und je nach Ausgestaltung mitunter vorgesehen bzw. erforderliche Rahmen- und/oder Randkonstruktionen der Brandschutzverglasung 11 und der Brandschutzscheiben 1 bzw. 12 nicht explizit dargestellt. Gleiches gilt für elektrische Anschlüsse zum Kontaktieren der Dünnschichtbauelemente 5.

Die Brandschutzscheiben 1 weisen jeweils wenigstens ein flächiges, zur Lichtaussendung anregbares oder aktivierbares und/oder hinsichtlich des Lichtdurchtritts durch selbiges beeinflussbares Dünnschichtbauelement 5 auf. Das Dünnschichtbauelement 5 ist vorzugsweise im Brandfall zur Lichtaussendung anregbar oder aktivierbar und/oder hinsichtlich des Lichtdurchtritts durch selbiges beeinflussbar und ansonsten im Wesentlichen transparent. Die Transparenz, entsprechend einem ersten Betriebszustand, in welchem das Dünnschichtbauelement 5 nicht aktiviert ist, ist in Fig. 16 in der links dargestellten Brandschutzscheibe 1 durch die gestrichelte Darstellung des Dünnschichtbauelements 5 gekennzeichnet. Die Dünnschichtbauelemente 5 bilden vorliegend jeweils ein Piktogramm aus, welches als Fluchtwegsymbol ausgestaltet ist und die für das Fluchtwegsymbol vorgeschriebenen Norm- bzw. Standard-gemäßen Anforderungen erfüllt, insbesondere hinsichtlich der Farbgebung. Das von den Dünnschichtbauelementen 5 ausgebildete Piktogramm ist vorliegend ein animiertes Piktogramm, bestehend aus wenigstens zwei Piktogrammen, die zeitlich und/oder hinsichtlich ihrer Position seitens der jeweiligen Brandschutzscheibe 1 zueinander versetzt zur Lichtaussendung anregbar oder aktivierbar und/oder hinsichtlich des Lichtdurchtritts beeinflussbar sind.

Die Animierung des Piktogramms jeder einzelnen Brandschutzscheibe erfolgt beispielhaft entsprechend den Darstellungen, wie sie bei dem Ausführungsbeispiel nach Fig. 13 in Fig. 14 und Fig. 15 gegeben ist. Im Brandfall werden die Dünnschichtbauelemente 5 der Brandschutzscheiben 1 aktiviert.

Zusätzlich zu der im Zusammenhang mit Fig. 13, Fig. 14 und Fig. 15 dargestellten gegebenen Animierung der Piktogramme der Dünnschichtbauelemente 5, sind die Dünnschichtbauelemente 5 der Brandschutzscheiben nach Fig. 16 ferner derart ausgebildet, dass die jeweilige Wiedergabe des Piktogramms vorzugsweise im Brandfall von Brandschutzscheibe 1 zu Brandschutzscheibe 1 um einen Betriebszustand entsprechend einer Darstellung nach Fig. 13, Fig. 14 und Fig. 15 zeitlich zueinander versetzt sind, so dass durch die Wiedergabe quasi eine animierte Signalisierungsbewegung von Brandschutzscheibe 1 zu Brandschutzscheibe 1 gegeben ist. Dementsprechend weist die in Fig. 16 links gelegene Brandschutzscheibe 1 der Brandschutzverglasung 11 in einem ersten im Brandfall gegebenen Betriebszustand eine Signalisierung auf, bei der das Piktogramm des Dünnschichtbauelements 5 nicht zu sehen ist (gestrichelte Darstellung des Dünnschichtbauelements 5 und die Verwendung des Bezugszeichens 5). Die in Fig. 16 in der Mitte gelegene Brandschutzscheibe 1 der Brandschutzverglasung 11 weist gleichzeitig in dem ersten im Brandfall gegebenen Betriebszustand eine Signalisierung auf, bei der das Piktogramm des Dünnschichtbauelements 5 in einem ersten Zustand zu sehen ist (nicht mehr gestrichelte Darstellung des Dünnschichtbauelements 5 und die Verwendung des Bezugszeichens 5'). Die in Fig. 16 rechts gelegene Brandschutzscheibe 1 der Brandschutzverglasung 11 weist gleichzeitig in dem ersten im Brandfall gegebenen Betriebszustand eine Signalisierung auf, bei der das Piktogramm des Dünnschichtbauelements 5 in einem zweiten Zustand zu sehen ist (nicht mehr gestrichelte Darstellung des Dünnschichtbauelements 5 mit breiteren Linien und die Verwendung des Bezugszeichens 5"). In einem zweiten, im Brandfall gegebenen Zustand der Brandschutzverglasung 11 werden die Wiedergaben der Piktogramme der Brandschutzscheiben 1 vorzugsweise zyklisch wiederholt und verschoben werden. Die links gelegene Brandschutzscheibe 1 weist dann eine Darstellung des Piktogramms entsprechend Bezugszeichen 5', die mittlere Brandschutzscheibe 1 eine Darstellung des Piktogramms entsprechend Bezugszeichen 5" und die rechts gelegene Brandschutzscheibe 1 eine Darstellung des Piktogramms entsprechend Bezugszeichen 5 auf. In einem dritten im Brandfall gegebenen Zustand der Brandschutzverglasung 11 weist die links gelegene Brandschutzscheibe 1 dann eine Darstellung des Piktogramms entsprechend Bezugszeichen 5", die mittlere Brandschutzscheibe 1 eine Darstellung des Piktogramms entsprechend Bezugszeichen 5 und die rechts gelegene Brandschutzscheibe 1 eine Darstellung des Piktogramms entsprechend Bezugszeichen 5' auf. Die beschriebenen Zustände der Brandschutzscheiben 1 der Brandschutzverglasung 11 werden dann weiter zyklisch wiederholt.

Die in den Figuren der Zeichnung dargestellten Ausführungsbeispiele und die im Zusammenhang mit diesen erläuterten Ausführungsbeispiele dienen lediglich einer Erläuterung der Erfindung und sind für diese nicht beschränkend.

### Bezugszeichenliste:

- 1: Brandschutzscheibe
- 2: Glasscheibe
- 3: Glasscheibe
- 4: Schicht aus Brandschutzmaterial
- 5: Dünnschichtbauelement
- 5': Dünnschichtbauelement
- 5": Dünnschichtbauelement
- 6: Schicht aus Brandschutzmaterial
- 7: Dünnschichtbauelement
- 8: Schicht (optional aus Brandschutzmaterial)
- 9: Schicht (optional aus Brandschutzmaterial)
- 10: Dünnschichtbauelement
- 11: Brandschutzverglasung
- 12: Brandschutzscheibe
- 13: Dünnschichtbauelement

## Patentansprüche

1. Brandschutzscheibe (1), insbesondere für eine Brandschutzverglasung (11) zur Vermeidung des Durchtritts von Feuer und/oder Rauch im Brandfall von einem Raum in einen anderen Raum,
bestehend aus einem Verbund von wenigstens zwei Glasscheiben (2, 3), zwischen denen wenigstens eine Schicht (4, 6) aus einem im Brandfall aufschäumenden oder anderweitig volumenvergrößernden Brandschutzmaterial angeordnet ist,
**dadurch gekennzeichnet,**
**dass** zwischen den Glasscheiben (2, 3)
wenigstens ein flächiges, hinsichtlich des Lichtdurchtritts durch selbiges beeinflussbares und wenigstens ein Flüssigkristallpolymer bzw. wenigstens ein flüssigkristallines Polymer (sogenanntes Liquid Crystal Polymer (LCP)) aufweisendes Dünnschichtbauelement (13), und/oder
wenigstens ein flächiges, zur Lichtaussendung anregbares oder aktivierbares und als organische Leuchtdiode, sogenannte OLED (OLED: Organic Light Emitting Diode), ausgebildetes Dünnschichtbauelement (5, 7, 10)
angeordnet ist
und
**dass** wenigstens eine der Glasscheiben (2, 3) aus einem Verbund von wenigstens zwei Glasscheiben (2, 2', bzw. 3, 3') ausgebildet ist, wobei zwischen den Glasscheiben (2, 2' bzw. 3, 3') dieses Verbundes
wenigstens ein flächiges, hinsichtlich des Lichtdurchtritts durch selbiges beeinflussbares und wenigstens ein Flüssigkristallpolymer bzw. wenigstens ein flüssigkristallines Polymer (sogenanntes Liquid Crystal Polymer (LCP)) aufweisendes Dünnschichtbauelement (13), und/oder
wenigstens ein flächiges, zur Lichtaussendung anregbares oder aktivierbares und als organische Leuchtdiode, sogenannte OLED (OLED: Organic Light Emitting Diode), ausgebildetes Dünnschichtbauelement (5, 7, 10)
angeordnet ist.

2. Brandschutzscheibe (1) nach Anspruch 1, **dadurch gekennzeichnet, dass** das zur Lichtaussendung anregbare oder aktivierbare Dünnschichtbauelement (5, 7, 10) im Brandfall zur Lichtaussendung anregbar oder aktivierbar ist und ansonsten vorzugsweise im Wesentlichen transparent ist, und/oder dass das hinsichtlich des Lichtdurchtritts durch selbiges beeinflussbare Dünnschichtbauelement (13) im Brandfall hinsichtlich des Lichtdurchtritts durch selbiges beeinflussbar ist.

3. Brandschutzscheibe (1) nach einem der Ansprüche 1 oder 2, **dadurch gekennzeichnet, dass** das zur Lichtaussendung anregbare oder aktivierbare Dünnschichtbauelement (5, 7, 10) und/oder das hinsichtlich des Lichtdurchtritts durch selbiges beeinflussbare Dünnschichtbauelement (13) wenigstens ein Piktogramm ausbildet, vorzugsweise ein Fluchtweg-, Notausgang- oder Gefahrensymbol.

4. Brandschutzscheibe (1) nach einem der vorhergehenden Ansprüche, **dadurch gekennzeichnet, dass** das zur Lichtaussendung anregbare oder aktivierbare Dünnschichtbauelement (5, 7, 10) und/oder das hinsichtlich des Lichtdurchtritts durch selbiges beeinflussbare Dünnschichtbauelement (13) wenigstens ein animiertes Piktogramm ausbildet, welches vorzugsweise aus wenigstens zwei Piktogrammen besteht, die zeitlich und/oder hinsichtlich ihrer Position seitens der Brandschutzscheibe (1) zueinander versetzt zur Lichtaussendung anregbar oder aktivierbar sind, besonders bevorzugt mit unterschiedlichen Farben bzw. Wellenlängen, bzw. hinsichtlich des Lichtdurchtritts durch selbiges beeinflussbar sind.

5. Brandschutzscheibe (1) nach einem der Ansprüche 1 bis 4, **dadurch gekennzeichnet, dass** das zur Lichtaussendung anregbare oder aktivierbare Dünnschichtbauelement (5, 7, 10) und/oder das hinsichtlich des Lichtdurchtritts durch selbiges beeinflussbare Dünnschichtbauelement (13) zumindest teilweise in der Schicht (4, 8, 9) aus Brandschutzmaterial angeordnet ist.

6. Brandschutzscheibe (1) nach einem der Ansprüche 1 bis 5, **dadurch gekennzeichnet, dass** das hinsichtlich des Lichtdurchtritts durch selbiges beeinflussbare Dünnschichtbauelement (13) vorzugsweise ein elektrochromes Dünnschichtbauelement (13) ausbildet.

7. Brandschutzscheibe (1) nach einem der Ansprüche 1 bis 6, **dadurch gekennzeichnet, dass** das zur Lichtaussendung anregbare oder aktivierbare Dünnschichtbauelement (5, 7, 10) vorzugsweise als PLED (PLED: Polymer Light Emitting Diode), SMOLED (SMOLED: Small Molecules Organic Light Emitting Diode) oder AMOLED (AMOLED: Active Matrix Organic Light Emitting Diode) ausgebildet ist.

8. Brandschutzscheibe (1) nach Anspruch 6 oder Anspruch 7, **dadurch gekennzeichnet, dass** elektrische Anschlüsse zum Kontaktieren des hinsichtlich des Lichtdurchtritts durch selbiges beeinflussbaren Dünnschichtbauelements (13) und/oder elektrische Anschlüsse zum Kontaktieren des zur Lichtaussendung anregbaren oder aktivierbaren Dünnschichtbauelements (5, 7, 10) zumindest an einem seitlichen Randbereich der Brandschutzscheibe (1) zugänglich sind.

9. Brandschutzscheibe (1) nach einem der Ansprüche 1 bis 8, **dadurch gekennzeichnet, dass** diese wenigstens ein vorzugsweise zwischen den Glasscheiben (2, 3, 2", 3") integriertes Sensorikelement zur Aktivierung des Dünnschichtbauelements (5, 7, 10, 13) aufweist.

10. Brandschutzscheibe (1) nach einem der Ansprüche 1 bis 9, **dadurch gekennzeichnet, dass** diese aus wenigstens zwei auf Abstand gehaltenen, parallelen Glasscheiben (2, 3) aufgebaut ist, deren geschlossener Innenraum mit einem insbesondere gelartigen Brandschutzmittel (4, 6, 8, 9) als Brandschutzmaterial gefüllt ist.

11. Brandschutzscheibe (1) nach einem der Ansprüche 1 bis 10, **dadurch gekennzeichnet, dass** diese zur Ausbildung einer Tür, eines Fensters, oder einer Trennwand ausgebildet ist.

12. Brandschutzverglasung (11) zur Vermeidung des Durchtritts von Feuer und/oder Rauch im Brandfall von einem Raum in einen anderen Raum, mit Brandschutzscheiben (1, 12) bestehend aus einem Verbund von wenigstens zwei Glasscheiben (2, 3), zwischen denen wenigstens eine Schicht (4, 6) aus einem Brandschutzmaterial angeordnet ist,
**dadurch gekennzeichnet, dass**
wenigstens eine der Brandschutzscheiben (1) der Brandschutzverglasung (11) eine Brandschutzscheibe (1) nach einem der Ansprüche 1 bis 11 ist.

13. Brandschutzverglasung (11) nach Anspruch 12, **gekennzeichnet durch** wenigstens zwei nebeneinander oder übereinander angeordnete Brandschutzscheiben (1) nach einem der Ansprüche 1 bis 11, deren Dünnschichtbauelemente (5, 7, 10) vorzugsweise im Brandfall zeitlich zueinander versetzt zur Lichtaussendung anregbar oder aktivierbar sind, und/oder deren Dünnschichtbauelemente (13) vorzugsweise im Brandfall hinsichtlich des Lichtdurchtritts **durch** selbige beeinflussbar sind.

## Claims

1. A fire protection pane (1), in particular for a fire protection glazing (11) for preventing fire and/or smoke from spreading from one room into another room in case of fire,
consisting of a composite structure of at least two glass panes (2, 3) between which at least one layer (4, 6) of a fire protection material, which foams or increases otherwise in volume in case of fire, is arranged,
**characterized in**
**that** between the glass panes (2, 3)
at least one flat thin film structural element (13) that can be influenced with respect to the passage of light through the same one and that comprises at least one liquid crystal polymer or at least one liquid-crystalline polymer (so called liquid crystal polymer (LCP))
and/or
at least one flat thin film structural element (5, 7, 10) that can be incited or activated to emit light and that is designed as an organic light-emitting diode, a so called OLED (OLED: Organic Light Emitting Diode),
is arranged
and
**that** at least one of the glass panes (2, 3) is formed by a composite structure of at least two glass panes (2, 2' or 3, 3'), wherein between the glass panes (2, 2' or 3, 3') of this composite structure
at least one flat thin film structural element (13) that can be influenced with respect to the passage of light through the same one and that comprises at least one liquid crystal polymer or at least one liquid-crystalline polymer (so called liquid crystal polymer (LCP))
and/or
at least one flat thin film structural element (5, 7, 10) that can be incited or activated to emit light and that is designed as an organic light-emitting diode, a so called OLED (OLED: Organic Light Emitting Diode)
is arranged.

2. A fire protection pane (1) according to claim 1, **characterized in that** the thin film structural element (5, 7, 10) that can be incited or activated to emit light can be incited or activated in case of fire to emit light and is otherwise preferably essentially transparent, and/or the thin film structural element (13) that can be influenced with respect to the passage of light through the same one can be influenced in case of fire with respect to the passage of light through the same one.

3. A fire protection pane (1) according to one of the claims 1 or 2, **characterized in that** the thin film structural element (5, 7, 10) that can be incited or activated to emit light and/or the thin film structural element (13) that can be influenced with respect to the passage of light through the same one forms at least one pictogram, preferably an escape route, an emergency exit or a danger symbol.

4. A fire protection pane (1) according to one of the preceding claims, **characterized in that** the thin film structural element (5, 7, 10) that can be incited or activated to emit light and/or the thin film structural element (13) that can be influenced with respect to the passage of light through the same one forms an animated pictogram which preferably consists of at least two pictograms which can be incited or activated for emitting light in a temporally offset manner and/or in an offset manner with respect to their position regarding the fire protection pane (1), most preferably in different colours or wavelengths, or which can be influenced with respect to the passage of light through the same one.

5. A fire protection pane (1) according to one of the claims 1 to 4, **characterized in that** the thin film structural element (5, 7, 10) that can be incited or activated to emit light and/or the thin film structural element (13) that can be influenced with respect to the passage of light through the same one is at least partially arranged in the layer (4, 8, 9) made of fire protection material.

6. A fire protection pane (1) according to one of the claims 1 to 5, **characterized in that** the thin film structural element (13) that can be influenced with respect to the passage of light through the same one preferably forms an electrochromic thin film structural element (13).

7. A fire protection pane (1) according to one of the claims 1 to 6, **characterized in that** the thin film structural element (5, 7, 10) that can be incited or activated to emit light is preferably designed as PLED (PLED: Polymer Light Emitting Diode), SMOLED (SMOLED: Small Molecules Organic Light Emitting Diode) or AMOLED (AMOLED: Active Matrix Organic Light Emitting Diode).

8. A fire protection pane (1) according to claim 6 or claim 7, **characterized in that** electric connections for contacting the thin film structural element (13) that can be influenced with respect to the passage of light through the same one and/or electric connections for contacting the thin film structural element (5, 7, 10) that can be incited or activated to emit light are at least accessible in a lateral edge area of the fire protection pane (1).

9. A fire protection pane (1) according to one of the claims 1 to 8, **characterized in that** this one comprises at least one sensor element for activating the thin film structural element (5, 7, 10, 13), which sensor element is preferably integrated between the glass panes (2, 3, 2", 3").

10. A fire protection pane (1) according to one of the claims 1 to 9, **characterized in that** this one is constructed by at least two parallel glass panes (2, 3) which are spaced apart from each other and the closed interior of which is filled with an especially gel-like fire retardant (4, 6, 8, 9) as fire protection material.

11. A fire protection pane (1) according to one of the claims 1 to 10, **characterized in that** this one is designed for forming a door, a window or a partition wall.

12. A fire protection glazing (11) for preventing fire and/or smoke from spreading from one room into another room in case of fire,
comprising fire protection panes (1, 12) consisting of a composite structure of at least two glass panes (2, 3) between which at least one layer (4, 6) of a fire protection material is arranged,
**characterized in that**
at least one of the fire protection panes (1) of the fire protection glazing (11) is a fire protection pane (1) according to one of the claims 1 to 11.

13. A fire protection glazing (11) according to claim 12, **characterized by** at least two fire protection panes (1) according to one of the claims 1 to 11 which are placed next to each other or on top of each other and the thin film structural elements (5, 7, 10) of which can be preferably incited or activated in case of fire in a temporally offset manner to emit light and/or the thin film structural elements (13) of which can be preferably influenced in case of fire with respect to the passage of light through the same ones.

## Revendications

1. Vitre de protection contre l'incendie (1), notamment pour un vitrage de protection contre l'incendie (11) pour empêcher le feu et/ou la fumée de se propager d'une pièce à une autre en cas d'incendie,
composée d'un ensemble d'au moins deux vitres en verre (2, 3), entre lesquelles est disposée au moins une couche (4, 6) en un matériau coupe-feu, qui mousse ou augmente autrement du volume en cas d'incendie,
**caractérisée en ce**
**que** entre les vitres en verre (2, 3) est disposé
au moins un élément de construction plat à couche mince (13), qui peut être influencé par rapport au passage de lumière à travers celui-ci et qui comprend au moins un polymère à cristaux liquides ou au moins un polymère cristallin liquide (un soi-disant « Liquid Crystal Polymer (LCP)), et/ou
au moins un élément de construction plat à couche mince (5, 7, 10), qui peut être incité ou activé à émettre de la lumière et qui est configuré comme une diode électroluminescente organique, appelée OLED (OLED : Organic Light Emitting Diode),
et
**qu'**au moins une des vitres en verre (2, 3) est formée par une structure composite d'au moins deux vires en verre (2, 2' ou 3, 3'), entre les vitres en verre (2, 2' ou 3, 3') de cette structure composite étant disposé
au moins un élément de construction plat à couche mince (13), qui peut être influencé par rapport au passage de lumière à travers celui-ci et qui comprend au moins un polymère à cristaux liquides ou au moins un polymère cristallin liquide (un soi-disant « Liquid Crystal Polymer (LCP)), et/ou
au moins un élément de construction plat à couche mince (5, 7, 10), qui peut être incité ou activé à émettre de la lumière et qui est configuré comme une diode électroluminescente organique, appelée OLED (OLED: Organic Light Emitting Diode).

2. Vitre de protection contre l'incendie (1) selon la revendication 1, **caractérisée en ce que** l'élément de construction plat à couche mince (5, 7, 10), qui peut être incité ou activé à émettre de la lumière peut être incité ou activé à émettre de la lumière en cas d'incendie et est pour le reste de préférence essentiellement transparent, et/ou que l'élément de construction plat à couche mince (13), qui peut être influencé par rapport au passage de lumière à travers celui-ci, peut être influencé par rapport au passage de lumière à travers celui-ci en cas d'incendie.

3. Vitre de protection contre l'incendie (1) selon l'une des revendications 1 ou 2, **caractérisée en ce que** l'élément de construction plat à couche mince (5, 7, 10), qui peut être incité ou activé à émettre de la lumière, et/ou l'élément de construction plat à couche mince (13), qui peut être influencé par rapport au passage de lumière à travers celui-ci forme au moins un pictogramme, de préférence un symbole d'issue de secours, de sortie de secours ou de danger.

4. Vitre de protection contre l'incendie (1) selon l'une des revendications précédentes, **caractérisée en ce que** l'élément de construction plat à couche mince (5, 7, 10), qui peut être incité ou activé à émettre de la lumière, et/ou l'élément de construction plat à couche mince (13), qui peut être influencé par rapport au passage de lumière à travers celui-ci forme au moins un pictogramme animé, qui est de préférence composé de deux pictogrammes, qui peuvent être incités ou activés à émettre de la lumière de manière décalée dans le temps et/ou de manière décalée par rapport à leur position du côté de la vitre de protection contre l'incendie (1), de préférence particulière avec des couleurs différentes ou des longueurs d'onde différentes, ou qui peuvent être influencés par rapport au passage de lumière à travers celui-ci.

5. Vitre de protection contre l'incendie (1) selon l'une des revendications 1 à 4, **caractérisée en ce que** l'élément de construction plat à couche mince (5, 7, 10), qui peut être incité ou activé à émettre de la lumière, et/ou l'élément de construction plat à couche mince (13), qui peut être influencé par rapport au passage de lumière à travers celui-ci est au moins partiellement disposé dans la couche (4, 8, 9) en matériau coupe-feu.

6. Vitre de protection contre l'incendie (1) selon l'une des revendications 1 à 5, **caractérisée en ce que** l'élément de construction plat à couche mince (13), qui peut être influencé par rapport au passage de lumière à travers celui-ci forme de préférence un élément de construction plat à couche mince (13) électrochromique.

7. Vitre de protection contre l'incendie (1) selon l'une des revendications 1 à 6, **caractérisée en ce que** l'élément de construction plat à couche mince (5, 7, 10), qui peut être incité ou activé à émettre de la lumière, est de préférence configuré comme une PLED (PLED : Polymer Light Emitting Diode), comme une SMOLED (SMOLED : Small Molecules Organic Light Emitting Diode) ou comme une AMOLED (AMOLED : Active Matrix Organc Light Emitting Diode).

8. Vitre de protection contre l'incendie (1) selon la revendication 6 ou la revendication 7, **caractérisée en ce que** des connexions électriques pour contacter l'élément de construction plat à couche mince (13), qui peut être influencé par rapport au passage de lumière à travers celui-ci, et/ou des connexions électriques pour contacter l'élément de construction plat à couche mince (5, 7, 10), qui peut être incité ou activé à émettre de la lumière, sont au moins accessibles dans une région de bord latéral de la vitre de protection contre l'incendie (1).

9. Vitre de protection contre l'incendie (1) selon l'une des revendications 1 à 8, **caractérisée en ce que** celle-ci comprend au moins un élément de capteur pour activer l'élément de construction plat à couche mince (5, 7, 10, 13), l'élément de capteur étant de préférence intégré entre les vitres en verre (2, 3, 2", 3").

10. Vitre de protection contre l'incendie (1) selon l'une des revendications 1 à 9, **caractérisée en ce que** celle-ci est composée d'au moins deux vitres en verre (2, 3) parallèles et espacées l'une de l'autre, dont l'intérieur fermé est rempli avec un produit coupe-feu notamment analogue à un gel (4, 6, 8, 9) comme matériau coupe-feu.

11. Vitre de protection contre l'incendie (1) selon l'une des revendications 1 à 10, **caractérisée en ce que** celle-ci est configurée pour former une porte, une fenêtre ou une cloison.

12. Vitrage de protection contre l'incendie (11) pour empêcher le feu et/ou la fumée de se propager d'une pièce à une autre en cas d'incendie, comprenant des vitres de protection contre l'incendie (1, 12) composées d'un ensemble d'au moins deux vitres en verre (2, 3), entre lesquelles est disposée au moins une couche (4, 6) en un matériau coupe-feu,
**caractérisé en ce qu'**
au moins une des vitres de protection contre l'incendie (1) du vitrage de protection contre l'incendie (11) est une vitre de protection contre l'incendie (1) selon l'une des revendications 1 à 11.

13. Vitrage de protection contre l'incendie (11) selon la revendication 12, **caractérisé par** au moins deux vitres de protection contre l'incendie (1) disposées côte à côte ou l'une au-dessus de l'autre selon l'une des revendications 1 à 11, dont les éléments de construction plats à couche mince (5, 7, 10) peuvent être incités ou activés à émettre de la lumière en cas d'incendie de préférence de manière décalée dans le temps et/ou dont les éléments de construction plats à couche mince (13) peuvent être influencés par rapport au passage de lumière à travers ceux-ci de préférence en cas d'incendie.
